# EUROPEAN PATENT APPLICATION

(11) **EP 4 395 437 A1**
(43) Date of publication of application: **03.07.2024**
(21) Application number: 22860362.7
(22) Date of filing: 18.08.2022
(51) Int. Cl.: H04W 72/04, H04W 72/54

(54) **TRANSMISSION PROCESSING METHOD AND APPARATUS, AND DEVICE**

(30) Priority: 24.08.2021 CN 202110975620
(71) Applicant: Vivo Mobile Communication Co., Ltd., Dongguan, Guangdong 523863 (CN)
(72) Inventor: WANG, Huan, Dongguan, Guangdong 523863 (CN); LIU, Jinhua, Dongguan, Guangdong 523863 (CN)
(74) Representative: Conti, Marco
(86) International application number: PCT/CN2022/113220
(87) International publication number: WO 2023/025016

(57) **Abstract**

This application discloses a transmission processing method and apparatus, and a device, and belongs to the field of communication technologies. The method in embodiments of this application includes: sending, by a network side device, beam indication information, the beam indication information indicates a transmission beam used for transmitting one first resource or one group of first resources between a repeater and a remote terminal; and the transmission beam includes a transmit beam and/or a receive beam, and the first resource includes a time domain resource and/or a frequency domain resource.

## Description

### CROSS-REFERENCE TO RELATED APPLICATIONS

This application claims priority to Chinese Patent Application No. 202110975620.7, filed in China on August 24, 2021, which is incorporated by reference in its entirety.

### TECHNICAL FIELD

This application relates to the field of communication technologies, and specifically, to a transmission processing method and apparatus, and a device.

### BACKGROUND

A repeater (repeater) is configured to expand coverage of a cell, including receiving and amplifying a downlink signal from an upstream base station, so that strength of the signal reaching user equipment (User Equipment, UE) is increased; and amplifying an uplink signal from the UE, so that strength of the uplink signal from the UE to the upstream base station is increased.

However, an existing beam indication method only involves beam control between a base station and UE. After a repeater is introduced between the base station and the UE, only beam control between the base station and the repeater can be achieved, and it is not clear how to control a beam between the repeater and the UE.

### SUMMARY

Embodiments of this application provide a transmission processing method and apparatus, and a device, which can implement control of a network side for a beam between a repeater and UE.

According to a first aspect, a transmission processing method is provided. The method includes:
sending, by a network side device, beam indication information, where
the beam indication information indicates a transmission beam used for transmitting one first resource or one group of first resources between a repeater and a remote terminal; and the transmission beam includes a transmit beam and/or a receive beam, and the first resource includes a time domain resource and/or a frequency domain resource.

According to a second aspect, a transmission processing apparatus is provided, including:
a sending module, configured to send beam indication information, where
the beam indication information indicates a transmission beam used for transmitting one first resource or one group of first resources between a repeater and a remote terminal; and the transmission beam includes a transmit beam and/or a receive beam, and the first resource includes a time domain resource and/or a frequency domain resource.

According to a third aspect, a transmission processing method is provided. The method includes:
receiving, by a repeater, beam indication information, where
the beam indication information indicates a transmission beam used for transmitting one first resource or one group of first resources between the repeater and a remote terminal; and the transmission beam includes a transmit beam and/or a receive beam, and the first resource includes a time domain resource and/or a frequency domain resource.

According to a fourth aspect, a transmission processing apparatus is provided, including:
a receiving module, configured to receive beam indication information, where
the beam indication information indicates a transmission beam used for transmitting one first resource or one group of first resources between a repeater and a remote terminal; and the transmission beam includes a transmit beam and/or a receive beam, and the first resource includes a time domain resource and/or a frequency domain resource.

According to a fifth aspect, a repeater is provided. The repeater includes a processor, a memory, and a program or instructions stored in the memory and runnable on the processor, the program or the instructions, when executed by the processor, implementing steps of the method according to the third aspect.

According to a sixth aspect, a repeater is provided, including a processor and a communication interface, where the communication interface is configured to receive beam indication information, where
the beam indication information indicates a transmission beam used for transmitting one first resource or one group of first resources between the repeater and a remote terminal; and the transmission beam includes a transmit beam and/or a receive beam, and the first resource includes a time domain resource and/or a frequency domain resource.

According to a seventh aspect, a network side device is provided. The network side device includes a processor, a memory, and a program or instructions stored in the memory and runnable on the processor, the program or the instructions, when executed by the processor, implementing steps of the method according to the first aspect.

According to an eighth aspect, a network side device is provided, including a processor and a communication interface, where the communication interface is configured to send beam indication information, where
the beam indication information indicates a transmission beam used for transmitting one first resource or one group of first resources between a repeater and a remote terminal; and the transmission beam includes a transmit beam and/or a receive beam, and the first resource includes a time domain resource and/or a frequency domain resource.

According to a ninth aspect, a readable storage medium is provided. The readable storage medium stores a program or instructions, the program or the instructions, when executed by a processor, implementing steps of the method according to the first aspect, or implementing steps of the method according to the third aspect.

According to a tenth aspect, a chip is provided. The chip includes a processor and a communication interface, where the communication interface is coupled to the processor, and the processor is configured to run a program or instructions, to implement the method according to the first aspect, or implement the method according to the third aspect.

According to an eleventh aspect, a computer program/program product is provided. The computer program/program product is stored in a non-volatile storage medium. The computer program/program product is executed by at least one processor to implement the method according to the first aspect, or implement the method according to the third aspect.

According to a twelfth aspect, a communication device is provided, configured to perform the method according to the first aspect, or perform the method according to the third aspect.

In the embodiments of this application, beam indication information is sent to a repeater, to indicate a transmission beam used for transmitting one first resource or one group of first resources between the repeater and a remote terminal. After the beam indication information is received, the repeater uses the indicated transmission beam for the transmission on the one first resource or one group of first resources, to implement control of a network side for the transmission between the repeater and the remote terminal, thereby ensuring higher transmission quality.

### BRIEF DESCRIPTION OF THE DRAWINGS

FIG 1 is a block diagram of a wireless communication system according to an embodiment of this application;
FIG. 2 is a first schematic flowchart of a transmission processing method according to an embodiment of this application;
FIG. 3 is a first schematic diagram of an indication of a transmission beam according to an embodiment of this application;
FIG. 4 is a second schematic diagram of an indication of a transmission beam according to an embodiment of this application;
FIG. 5 is a third schematic diagram of an indication of a transmission beam according to an embodiment of this application;
FIG. 6 is a fourth schematic diagram of an indication of a transmission beam according to an embodiment of this application;
FIG. 7 is a second schematic flowchart of a transmission processing method according to an embodiment of this application;
FIG. 8 is a structural diagram of an apparatus corresponding to FIG. 2;
FIG. 9 is a structural diagram of an apparatus corresponding to FIG. 7;
FIG. 10 is a structural diagram of a communication device according to an embodiment of this application;
FIG. 11 is a structural diagram of a terminal according to an embodiment of this application; and
FIG. 12 is a structural diagram of a network side device according to an embodiment of this application.

### DETAILED DESCRIPTION

The following clearly describes the technical solutions in the embodiments of this application with reference to the accompanying drawings in the embodiments of this application. Apparently, the described embodiments are some embodiments of this application rather than all of the embodiments. All other embodiments obtained by a person of ordinary skill in the art based on the embodiments of this application fall within the protection scope of this application.

The specification and claims of this application, and terms "first" and "second" are used to distinguish similar objects, but are unnecessarily used to describe a specific sequence or order. It should be understood that the terms in such a way are interchangeable in proper circumstances, so that the embodiments of this application can be implemented in other orders than the order illustrated or described herein. Objects distinguished by "first" and "second" are usually one type, and the quantity of objects is not limited. For example, the first object may be one or more than one. In addition, in the specification and the claims, "and/or" means at least one of the connected objects, and the character "/" generally indicates an "or" relationship between the associated objects.

It should be noted that, the technologies described in the embodiments of this application are not limited to a long term evolution (Long Term Evolution, LTE) system or an LTE-advanced (LTE-Advanced, LTE-A) system, and can also be used in other wireless communication systems, such as, code division multiple access (Code Division Multiple Access, CDMA), time division multiple access (Time Division Multiple Access, TDMA), frequency division multiple access (Frequency Division Multiple Access, FDMA), orthogonal frequency division multiple access (Orthogonal Frequency Division Multiple Access, OFDMA), and single-carrier frequency-division multiple access (Single-carrier Frequency-Division Multiple Access, SC-FDMA). The terms "system" and "network" in the embodiments of this application are often used interchangeably, and the described technology can be used not only for the above systems and radio technologies, but also for other systems and radio technologies. The following description describes a new radio (New Radio, NR) system for example objectives, and NR terms are used in most of the description below, although these technologies are also applicable to applications other than NR system applications, such as a 6^{th} generation (6^{th} Generation, 6G) communication system.

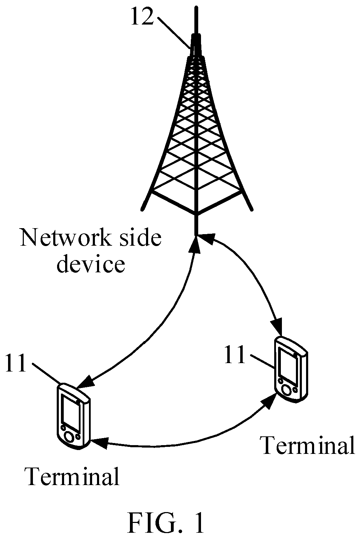

FIG. 1 is a block diagram of a wireless communication system to which the embodiments of this application are applicable. The wireless communication system includes a terminal 11 and a network side device 12. The terminal 11 may also be referred to as a terminal device or a user terminal (User Equipment, UE). The terminal 11 may be, for example, a terminal-side device such as a mobile phone, a tablet personal computer (Tablet Personal Computer), a laptop computer (Laptop Computer), a personal digital assistant (Personal Digital Assistant, PDA), a palmtop computer, a netbook, an ultra-mobile personal computer (ultra-mobile personal computer, UMPC), a mobile Internet device (Mobile Internet Device, MID), a wearable device (Wearable Device), a vehicle user equipment (Vehicle User Equipment, VUE), or a pedestrian terminal (Pedestrian User Equipment, PUE). The wearable device includes: a bracelet, earphones, glasses, or the like. It should be noted that, a specific type of the terminal 11 is not limited in the embodiments of this application. The network side device 12 may be a base station or a core network, where the base station may be referred to as a NodeB, an evolved nodeB, an access point, a base transceiver station (Base Transceiver Station, BTS), a radio base station, a radio transceiver, a basic service set (Basic Service Set, BSS), an extended service set (Extended Service Set, ESS), a nodeB, an evolved nodeB (Evolved NodeB, eNB), a home nodeB, a home evolved nodeB, a wireless local area network (Wireless Local Area Network, WLAN) access point, a WiFi node, a transmitting receiving point (Transmitting Receiving Point, TRP), or another appropriate term in the field, as long as the same technical effect is achieved. The base station is not limited to a specified technical term. It should be noted that, a base station in the NR system is used as an example in the embodiments of this application, but a specific type of the base station is not limited.

A transmission processing method provided in the embodiments of this application is described below through some embodiments and application scenarios thereof with reference to the accompanying drawings.

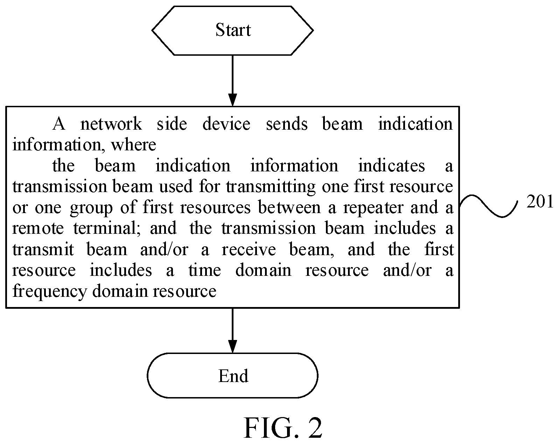

As shown in FIG. 2, a transmission processing method in an embodiment of this application includes the following steps.

Step 201: A network side device sends beam indication information.

The beam indication information indicates a transmission beam used for transmitting one first resource or one group of first resources between a repeater and a remote terminal; and the transmission beam includes a transmit beam and/or a receive beam, and the first resource includes a time domain resource and/or a frequency domain resource.

In this way, a network side device sends beam indication information to a repeater, to indicate a transmission beam used for transmitting one first resource or one group of first resources between the repeater and a remote terminal. After the beam indication information is received, the repeater uses the indicated transmission beam for the transmission on the one first resource or one group of first resources, to implement control of a network side for the transmission between the repeater and the remote terminal, thereby ensuring higher transmission quality.

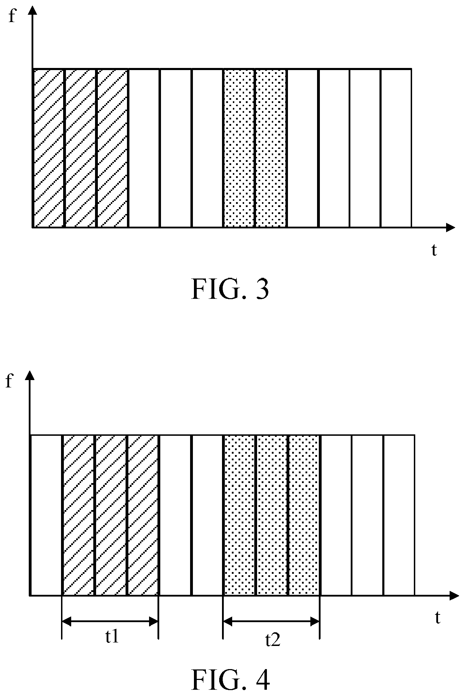

Herein, the network side device may indicate a transmission beam used for one resource or one group of resources, and the one resource or one group of resources may be a time domain resource and/or a frequency domain resource. As shown in FIG. 3, the beam indication information indicates that a transmission beam used for one group of resources (resources 0 to 2) is a beam 1, and indicates that a transmission beam used for one group of resources (resources 6 to 7) is a beam 2, where a transmission beam used for other resources is not indicated.

Certainly, the indicated transmission beam may be a transmit beam of and/or a receive beam.

Optionally, the beam indication information is indicated in at least one of the following manners:
a semi-persistent indication; and
a dynamic indication.

The semi-persistent indication may be a radio resource control (Radio Resource Control, RRC) signaling indication, F 1 signaling, a media access control control element (Media Access Control Control Element, MAC CE) indication, a physical downlink control channel (Physical Downlink Control Channel, PDCCH) indication, or the like. The dynamic indication may be a MAC CE indication, or a downlink control information (Downlink Control Information, DCI) indication.

However, if there is semi-persistent beam indication information, dynamic beam indication information may cover the semi-persistent beam indication information. For example, as shown in FIG. 3, semi-persistent beam indication information indicates that a transmission beam used for one group of resources (resources 0 to 2) is a beam 1, and indicates that a transmission beam used for one group of resources (resources 6 to 7) is a beam 2, where a transmission beam used for other resources is not indicated. However, if there is dynamic beam indication information indicating that a transmission beam used for the resource 6 is a beam 3, the repeater transmits and uses, on the resource 6, the beam 3 rather than the beam 2.

Optionally, in this embodiment, the transmission beam is a fixed beam or a variable beam.

In other words, the network side device may indicate that the fixed beam is the transmission beam used for the one first resource or one group of first resources, or may indicate that the variable beam is the transmission beam used for the one first resource or one group of first resources.

Optionally, the network side device indicates, in a semi-persistent indication manner, that the transmission beam used for the first resource is a target fixed beam or a variable beam, where
in a case that the transmission beam is the target fixed beam, the network side device indicates beam information corresponding to the target fixed beam in the semi-persistent indication manner; and/or
in a case that the transmission beam is the variable beam, the network side device sends the beam indication information corresponding to the first resource in a dynamic indication manner.

To be specific, the beam indication information is sent in the semi-persistent indication manner, and the beam indication information specifically indicates beam information corresponding to one fixed beam or some fixed beams (target fixed beam), to achieve indicating the transmission beam used for the one first resource or one group of first resources. In this case, the target fixed beam is the transmission beam.

However, when the beam indication information sent in the semi-persistent indication manner does not include that a transmission beam used for one first resource or some first resources is a variable beam, the beam indication information corresponds to beam indication information for the one first resource or some first resources. In this way, a quantity of resources corresponding to a repeater beam can be dynamically adjusted subsequently based on a quantity of UE or traffic loads (traffic load) under different repeater beams. In other words, if the beam indication information does not indicate a transmission beam used for one first resource or some first resources, the transmission beam used for the one first resource or some first resources may be considered as a variable beam. Afterwards, the network side device may alternatively send, in a dynamic indication manner, the beam indication information of the first resource using the variable beam.

In addition, optionally, that the network side device sends the beam indication information corresponding to the first resource in a dynamic indication manner includes:
sending first DCI including the beam indication information, where
the first DCI is specified DCI used for a beam indication; and
the specified DCI includes at least one of the following:
   DCI in a specified format;
   DCI corresponding to a specified radio network temporary identifier (Radio Network Temporary Identifier, RNTI);
   DCI corresponding to a specified control resource set (Control resource set, CORESET); and
   DCI corresponding to a specified search space (Search Space, SS).

In other words, the network side device uses at least one DCI in the DCI in the specified format (format), the DCI corresponding to the specified RNTI, the DCI corresponding to the specified CORESET, and the DCI corresponding to the specified SS, for the beam indication. In other words, the network side device carries the foregoing beam indication information, to distinguish another DCI. Certainly, a specified field of the specified DCI may indicate that the specified DCI is used for the beam indication.

For the specified DCI, optionally, the specified DCI is group common (Group common) DCI, and a target field used for carrying the beam indication information is preconfigured in the group common DCI.

To be specific, the specified DCI is the Group common DCI, for example, Group common DCI corresponding to the specified RNTI, which can save signaling overheads. The target field is further preconfigured in the specified Group common DCI, to carry the beam indication information.

In this embodiment, the beam indication information may directly include beam information of the indicated transmission beam. For a plurality of first resources or a plurality of groups of first resources, optionally, the beam indication information includes a first identifier, the first identifier identifies one transmission beam or one group of transmission beams, and the one transmission beam or one group of transmission beams are mapped to the one first resource or one group of first resources, to help avoid large signaling overheads.

Herein, the identifier of the one transmission beam or one group of transmission beams is preset, and there is a mapping relationship between the one transmission beam or one group of transmission beams and the one first resource or one group of first resources. In this way, the beam indication information only needs to include the first identifier, so that the repeater can know, through the first identifier, beam information of the transmission beam used for the one first resource or one group of first resources that are mapped to. If a first identifier 1 is dynamically indicated and a beam identified by the first identifier 1 is a beam A, the repeater can know, based on a mapping relationship between the beam A and a resource 1, to perform transmission on the resource 1 by using the beam A.

In this embodiment, optionally, if the first resource includes the time domain resource, a granularity of the time domain resource is a slot, a sub-slot, or a symbol; and/or
if the first resource includes the frequency domain resource, a granularity of the frequency domain resource is a resource block group (Resource block group, RBG), a physical resource block (Physical Resource Block, PRB), a serving cell, or a sub-band.

The granularity of the frequency domain resource may be N RBGs, N PRBs, N serving cells (serving cell), or N sub-bands. The granularity of the time domain resource is per/N slots (slot), per/N sub-time slots (sub-slot), or per/N symbols (symbol). N is an integer greater than or equal to 1. Certainly, the granularity of the time domain resource and the granularity of the frequency domain resource may be predefined or configured.

In this embodiment, optionally, the transmission beam corresponds to one group of first resources, and the one group of first resources are resources in preset duration.

In other words, the transmission beam indicated by the network side device is applicable to a plurality of first resources in the preset duration. For example, as shown in FIG. 4, the beam indication information indicates that a transmission beam used for resources within tl time is a beam 1, and a transmission beam used for resources within t2 time is a beam 2.

Optionally, the one first resource or one group of first resources occur in a preset periodicity.

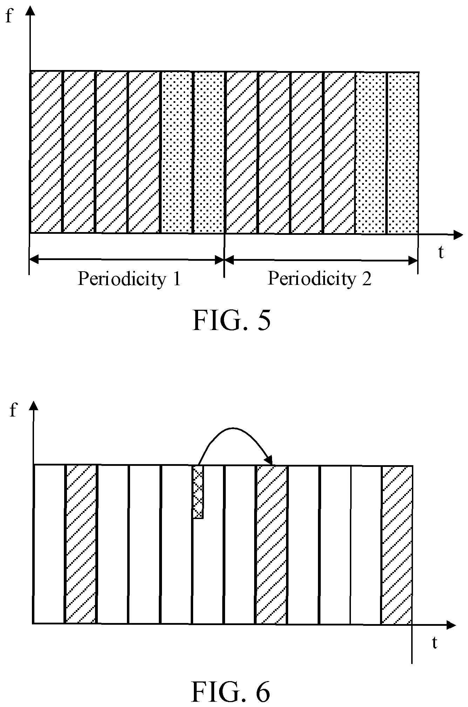

In other words, the transmission beam indicated by the network side device is applicable to one resource or one group of resources that occur in the preset periodicity. For example, as shown in FIG. 5, the beam indication information indicates that, in one periodicity, a transmission beam used for resources 0 to 3 is a beam 1, and a transmission beam used for resources 4 to 5 is a beam 2.

Certainly, during the semi-persistent indication and the dynamic indication, resources that the indicated transmission beam is applicable to are different. For example, the transmission beam indicated through the semi-persistent indication corresponds to and is applicable to the plurality of first resources in the preset duration; and the transmission beam indicated through the dynamic indication corresponds to and is applicable to the one first resource or one group of first resources that occur in the preset periodicity.

In this embodiment, optionally, effective start time of the beam indication information is preset time.

Herein, the preset time may be predefined, or configured by a network side, or may be determined and reported by the repeater to the network side. Specifically, the preset time may be an x^{th} time unit after the repeater receives dynamic beam indication information, so that processing time for the beam indication information, beam conversion time, or the like can be reserved between the time when the beam indication information is received and the x^{th} time unit. x may be dynamically indicated by the network side device or configured by RRC.

Optionally, step 201 includes:
sending, by the network side device, the corresponding beam indication information based on a transmission direction of the first resource, where
the transmission direction includes at least one of the following:
   uplink transmission;
   downlink transmission; and
   flexible transmission.

In other words, the network side device may independently send beam indication information corresponding to one transmission direction or a plurality of transmission directions.

Optionally, step 201 includes:
sending, by the network side device, the corresponding beam indication information based on a channel type of the first resource, where
the channel type includes at least one of the following:
   a physical downlink control channel PDCCH;
   a physical downlink shared channel (Physical downlink shared channel, PDSCH);
   a physical uplink control channel (Physical Uplink Control Channel, PUCCH); and
   a physical uplink shared channel (Physical Uplink Shared Channel, PUSCH).

In other words, the network side device may independently send beam indication information corresponding to one channel or a plurality of channels.

In addition, for the beam indication information sent based on the channel type of the first resource, the network side device may further indicate time/frequency domain resource occupation information of a channel.

Optionally, the sending, by the network side device, the corresponding beam indication information based on a channel type of the first resource includes:
in a case that the channel type of the first resource is the PDCCH, sending, by the network side device, first indication information, where the first indication information includes the beam indication information; and
the first indication information is valid in a repeater-level control resource set CORESET/search space SS.

Herein, the repeater-level (repeater-level) CORESET/SS is a CORESET/SS dedicated to the repeater. A UE-level (UE-level) CORESET/SS is a sub-set of the repeater-level CORESET/SS. When the network side device sends beam indication information, a case that the beam indication information indicates the transmission beam for the first resource on the PDCCH may be implemented by carrying the beam indication information through the first indication information. The first indication information is valid in the repeater-level CORESET/SS.

Optionally, the first indication information further includes at least one of the following:
a time domain resource position of the CORESET;
a frequency domain resource position of the CORESET;
a time domain resource position of the SS; and
a frequency domain resource position of the SS.

Optionally, the transmission beam indicated by the beam indication information corresponds to the repeater-level CORESET/SS.

To be specific, the transmission beam indicated by the beam indication information corresponds to the first resource on the repeater-level CORESET/SS. To be specific, based on an indication of the beam indication information, the repeater sends, on the corresponding CORESET/SS, PDCCH through the transmission beam indicated.

Certainly, the CORESET may alternatively be divided into a plurality of sub-CORESETs (sub-CORESET), and the network side device may further indicate a transmission beam corresponding to a first resource of a sub-CORESET. The SS may alternatively be divided into a plurality of sub-CORESETs, and the network side device may further indicate a transmission beam corresponding to a first resource of a sub-CORESET. In this way, a plurality of UE can share one repeater-level CORESET/SS.

Optionally, after the sending, by the network side device, first indication information including the beam indication information, the method further includes:
sending, by the network side device, second indication information, where the second indication information indicates PDCCH monitoring occasion(s)/resource(s) on which PDCCH transmission exists, where
the beam indication information is valid in the PDCCH monitoring occasion(s)/resource(s).

Herein, the PDCCH monitoring occasion(s) (monitoring occasion(s))/resource(s) (resource(s)) on which the PDCCH transmission exists may alternatively be understood as the PDCCH monitoring occasion(s)/resource(s) on which the PDCCH transmission is potential. Through the second indication information, the network side device further determines that the beam indication information is valid for the PDCCH monitoring occasion(s) or resource(s) on which the PDCCH transmission exists.

For example, in resources shown in FIG. 6, for three PDCCH sending resources (resources whose backgrounds are slashes), only second PDCCH sending resource is a PDCCH sending resource that is indicated by the second indication information and on which PDCCH transmission exists. In this case, the beam indication information is valid only for the second PDCCH sending resource.

The second indication information may be sent through high layer signaling (for example, RRC or MAC CE) or physical layer signaling (DCI). The MAC CE notifies the second indication information, and a specified logical channel identify (Logical Channel Identify, LCID) of the MAC CE or a specified field of the MAC CE indicates that the MAC CE includes the second indication information. The DCI notifies the second indication information; and a specified DCI format/RNTI/CORESET/SS is used to distinguish DCI including the second indication information, or a specified field in the DCI indicates that the DCI includes the second indication information.

Optionally, step 201 includes:
sending, by the network side device, third indication information including the beam indication information, where the third indication information indicates repeater-level resource scheduling.

In other words, a beam indication of the network side device can indicate based on the repeater-level resource scheduling. The third indication information may be scheduling information of a repeater-level PDCCH, PDSCH, PUCCH, or PUSCH. Herein, repeater-level scheduling information exists independently from scheduling signaling of legacy (legacy) UE, and only the repeater can demodulate the scheduling information.

Optionally, the third indication information further includes at least one of the following:
a time domain resource position for the scheduling;
a frequency domain resource position for the scheduling;
a time domain position of monitoring occasion(s)/resource(s) on which the scheduling exists;
a frequency domain position of the monitoring occasion(s)/resource(s) on which the scheduling exists;
a time domain position of receiving occasion(s)/resource(s) on which the scheduling exists; and
a frequency domain position of the receiving occasion(s)/resource(s) on which the scheduling exists.

Herein, the monitoring occasion(s)/resource(s) on which the scheduling exists is monitoring occasion(s)/resource(s) on which PDCCH/PDSCH transmission for scheduling exists (is potential). The receiving occasion(s)/resource(s) on which the scheduling exists is receiving occasion(s)/resource(s) on which the PUCCH/PUSCH transmission for the scheduling exists (is potential).

For the beam indication information included in the third indication information, optionally, the beam indication information is valid in at least one of the following positions:
the time domain position of the monitoring occasion(s)/resource(s) on which the scheduling exists;
the frequency domain position of the monitoring occasion(s)/resource(s) on which the scheduling exists;
the time domain position of the receiving occasion(s)/resource(s) on which the scheduling exists; and
the frequency domain position of the receiving occasion(s)/resource(s) on which the scheduling exists.

In other words, the repeater only needs to obey the beam indication information at one or more of the foregoing positions.

Optionally, a priority of the beam indication information sent through the third indication information is higher than that of the beam indication information indicated through a semi-persistent indication and/or a dynamic indication.

In other words, resource-scheduling-level beam indication information may cover the beam indication information indicated through the semi-persistent indication and/or the dynamic indication.

Optionally, in a case of downlink semi-persistent scheduling or uplink cell group scheduling, the beam indication information is indicated through the semi-persistent indication.

In other words, for downlink semi-persistent scheduling (Downlink Semi-Persistent Scheduling, DL SPS) or uplink cell group (Uplink Cell Group, UL (type 1) CG) scheduling, a semi-persistent indication manner is used for the beam indication information.

In addition, in this embodiment, the beam indication information does not indicate a transmission beam used for transmitting one resource or some resources between the repeater and the remote terminal. Therefore, in a case that the repeater receives the beam indication information and the beam indication information does not indicate a transmission beam used for transmitting a second resource between the repeater and the remote terminal, the repeater performs at least one of the following:
transmitting the second resource by using a preset beam;
transmitting the second resource by using a beam used for previous transmission of the second resource;
stopping transmission of the second resource;
reducing transmission power of the second resource;
requesting the beam used for transmitting the second resource from the network side device; and
independently determining the beam used for transmitting the second resource, and sending the beam to the network side device.

For example, two receive beams (receive beam, RX beam) for uplink reception between the repeater and the remote terminal are preset on the repeater, and identifiers preset for the RX beams are Q1 and Q2 respectively. Two transmit beams (transmit beam, TX beam) for downlink transmission between the repeater and the remote terminal are preset on the repeater, and identifiers preset for the TX beams are P1 and P2 respectively. In this case, the network side device may send beam indication information including Q1 and P2. In this way, the repeater receives a signal that needs to be sent in an uplink by using an RX beam corresponding to Q1, and sends a signal that needs to be sent in a downlink by using a TX beam corresponding to P2. In addition, when the repeater does not receive the beam indication information, the network side device sends, through a configuration, a signal that needs to be sent in an uplink by using a TX beam corresponding to P1, and receives a signal that needs to be sent in a downlink by using the RX beam corresponding to Q1.

In this embodiment, the repeater is not limited to a repeater, and may alternatively be a reconfigurable intelligent surface (Reconfigurable Intelligent Surface, RIS) node.

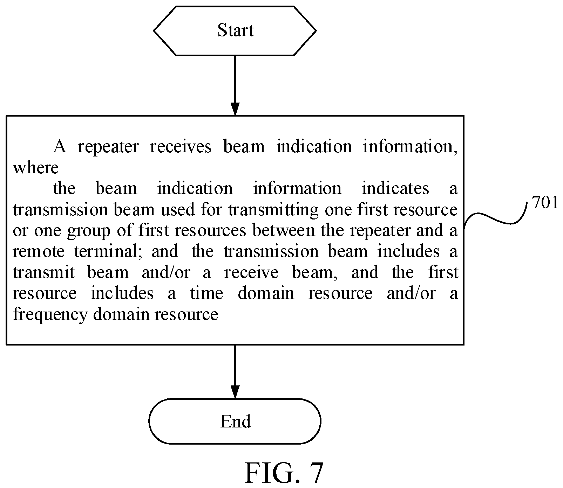

As shown in FIG. 7, a transmission processing method in an embodiment of this application includes the following steps.

Step 701: A repeater receives beam indication information.

The beam indication information indicates a transmission beam used for transmitting one first resource or one group of first resources between the repeater and a remote terminal; and the transmission beam includes a transmit beam and/or a receive beam, and the first resource includes a time domain resource and/or a frequency domain resource.

For beam indication information sent by a network side device, a repeater receives the beam indication information, to know an indicated transmission beam used for transmitting one first resource or one group of first resources between the repeater and a remote terminal. Afterwards, the indicated transmission beam is used for the transmission on the one first resource or one group of first resources, to implement control of a network side for the transmission between the repeater and the remote terminal, thereby ensuring higher transmission quality.

After step 701, the repeater performs transmission on the one first resource or one group of first resources by using the transmission beam indicated by the beam indication information.

Optionally, the beam indication information is indicated in at least one of the following manners:
a semi-persistent indication; and
a dynamic indication.

Optionally, the transmission beam is a fixed beam or a variable beam.

Optionally, if a network side device indicates, in a semi-persistent indication manner, that the transmission beam used for the first resource is a target fixed beam or a variable beam,
in a case that the transmission beam is the target fixed beam, the network side device indicates beam information corresponding to the target fixed beam in the semi-persistent indication manner; and/or
in a case that the transmission beam is the variable beam, the network side device sends the beam indication information corresponding to the first resource in a dynamic indication manner.

Optionally, the dynamic indication manner includes:
sending, by the network side device, first DCI including the beam indication information, where
the first DCI is specified DCI used for a beam indication; and
the specified DCI includes at least one of the following:
   DCI in a specified format;
   DCI corresponding to a specified radio network temporary identifier RNTI;
   DCI corresponding to a specified control resource set CORESET; and
   DCI corresponding to a specified search space SS.

Optionally, the specified DCI is group common DCI, and a target field used for carrying the beam indication information is preconfigured in the group common DCI.

Optionally, the beam indication information includes a first identifier, the first identifier identifies one transmission beam or one group of transmission beams, and the one transmission beam or one group of transmission beams are mapped to the one first resource or one group of first resources.

Optionally, if the first resource includes the time domain resource, a granularity of the time domain resource is a slot, a sub-slot, or a symbol; and/or
if the first resource includes the frequency domain resource, a granularity of the frequency domain resource is a resource block group RBG, a physical resource block PRB, a serving cell, or a sub-band.

Optionally, the transmission beam corresponds to one group of first resources, and the one group of first resources are resources in preset duration.

Optionally, the one first resource or one group of first resources occur in a preset periodicity.

Optionally, effective start time of the beam indication information is preset time.

Optionally, the beam indication information is sent based on a transmission direction of the first resource, where the transmission direction includes at least one of the following:
uplink transmission;
downlink transmission; and
flexible transmission.

Optionally, the beam indication information is sent based on a channel type of the first resource, where the channel type includes at least one of the following:
a physical downlink control channel PDCCH;
a physical downlink shared channel PDSCH;
a physical uplink control channel PUCCH; and
a physical uplink shared channel PUSCH.

Optionally, the receiving, by a repeater, beam indication information includes:
in a case that a channel type of the first resource is a PDCCH, receiving, by the repeater, first indication information including the beam indication information, where
the first indication information is valid in a repeater-level control resource set CORESET or search space SS.

Optionally, the first indication information further includes at least one of the following:
a time domain resource position of the CORESET;
a frequency domain resource position of the CORESET;
a time domain resource position of the SS; and
a frequency domain resource position of the SS.

Optionally, the transmission beam indicated by the beam indication information corresponds to the repeater-level CORESET/SS.

Optionally, after the receiving, by a repeater, beam indication information, the method further includes:
in a case that the received beam indication information does not indicate a transmission beam used for transmitting a second resource between the repeater and the remote terminal, performing at least one of the following:
transmitting the second resource by using a preset beam;
transmitting the second resource by using a beam used for previous transmission of the second resource;
stopping transmission of the second resource;
reducing transmission power of the second resource;
requesting the beam used for transmitting the second resource from the network side device; and
independently determining the beam used for transmitting the second resource, and sending the beam to the network side device.

Optionally, after the receiving, by the repeater, first indication information including the beam indication information, the method further includes:
receiving, by the repeater, second indication information sent by the network side device, where the second indication information indicates PDCCH monitoring occasion(s)/resource(s) on which PDCCH transmission exists, where
the beam indication information is valid in the PDCCH monitoring occasion(s)/resource(s).

Optionally, the receiving, by a repeater, beam indication information includes:
receiving, by the repeater, third indication information including the beam indication information, where
the third indication information indicates repeater-level resource scheduling.

Optionally, the third indication information further includes at least one of the following:
a time domain resource position for the scheduling;
a frequency domain resource position for the scheduling;
a time domain position of monitoring occasion(s)/resource(s) on which the scheduling exists;
a frequency domain position of the monitoring occasion(s)/resource(s) on which the scheduling exists;
a time domain position of receiving occasion(s)/resource(s) on which the scheduling exists; and
a frequency domain position of the receiving occasion(s)/resource(s) on which the scheduling exists.

Optionally, the beam indication information is valid in at least one of the following positions:
the time domain position of the monitoring occasion(s)/resource(s) on which the scheduling exists;
the frequency domain position of the monitoring occasion(s)/resource(s) on which the scheduling exists;
the time domain position of the receiving occasion(s)/resource(s) on which the scheduling exists; and
the frequency domain position of the receiving occasion(s)/resource(s) on which the scheduling exists.

Optionally, a priority of the beam indication information sent through the third indication information is higher than that of the beam indication information indicated through a semi-persistent indication and/or a dynamic indication.

Optionally, in a case of downlink semi-persistent scheduling or uplink cell group scheduling, the beam indication information is indicated through the semi-persistent indication.

It should be noted that, the method cooperates with the foregoing method performed by a network side device for implementing, and the implementations of the embodiments of the foregoing method are applicable to the method, and can also achieve the same technical effects.

It should also be noted that, in a transmission processing method provided in the embodiments of this application, an execution entity may be a transmission processing apparatus, or a control module configured to execute and load the transmission processing method in the transmission processing apparatus. In the embodiments of this application, an example in which the transmission processing apparatus executes and loads the transmission processing method is used to describe the transmission processing method provided in the embodiments of this application.

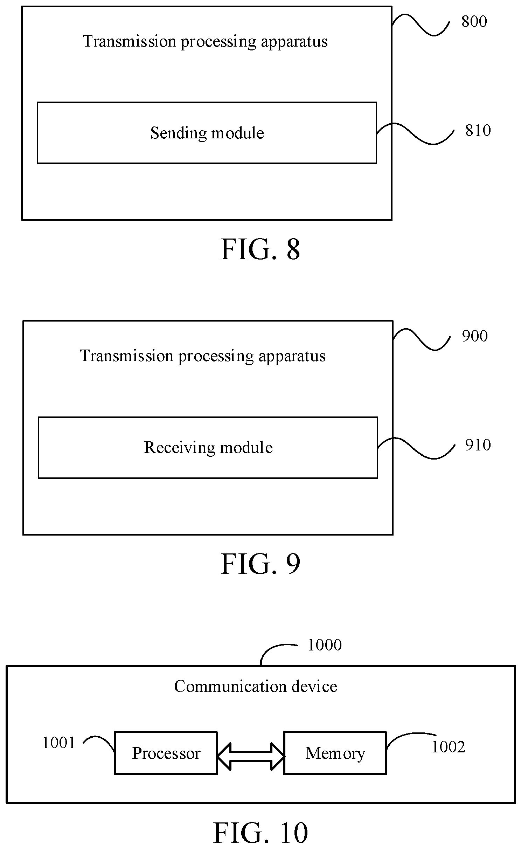

As shown in FIG. 8, a transmission processing apparatus 800 in an embodiment of this application includes:
a sending module 810, configured to send beam indication information, where
the beam indication information indicates a transmission beam used for transmitting one first resource or one group of first resources between a repeater and a remote terminal; and the transmission beam includes a transmit beam and/or a receive beam, and the first resource includes a time domain resource and/or a frequency domain resource.

Optionally, the beam indication information is indicated in at least one of the following manners:
a semi-persistent indication; and
a dynamic indication.

Optionally, the transmission beam is a fixed beam or a variable beam.

Optionally, the network side device indicates, in a semi-persistent indication manner, that the transmission beam used for the first resource is a target fixed beam or a variable beam, where
in a case that the transmission beam is the target fixed beam, the network side device indicates beam information corresponding to the target fixed beam in the semi-persistent indication manner; and/or
in a case that the transmission beam is the variable beam, the network side device sends the beam indication information corresponding to the first resource in a dynamic indication manner.

Optionally, the sending module is further configured to:
send first DCI including the beam indication information, where
the first DCI is specified DCI used for a beam indication; and
the specified DCI includes at least one of the following:
   DCI in a specified format;
   DCI corresponding to a specified radio network temporary identifier RNTI;
   DCI corresponding to a specified control resource set CORESET; and
   DCI corresponding to a specified search space SS.

Optionally, the specified DCI is group common DCI, and a target field used for carrying the beam indication information is preconfigured in the group common DCI.

Optionally, the beam indication information includes a first identifier, the first identifier identifies one transmission beam or one group of transmission beams, and the one transmission beam or one group of transmission beams are mapped to the one first resource or one group of first resources.

Optionally, if the first resource includes the time domain resource, a granularity of the time domain resource is a slot, a sub-slot, or a symbol;
if the first resource includes the frequency domain resource, a granularity of the frequency domain resource is a resource block group RBG, a physical resource block PRB, a serving cell, or a sub-band.

Optionally, the transmission beam corresponds to one group of first resources, and the one group of first resources are resources in preset duration.

Optionally, the one first resource or one group of first resources occur in a preset periodicity.

Optionally, effective start time of the beam indication information is preset time.

Optionally, the sending module is further configured to:
send the corresponding beam indication information based on a transmission direction of the first resource, where
the transmission direction includes at least one of the following:
   uplink transmission;
   downlink transmission; and
   flexible transmission.

Optionally, the sending module is further configured to:
send the corresponding beam indication information based on a channel type of the first resource, where
the channel type includes at least one of the following:
   a physical downlink control channel PDCCH;
   a physical downlink shared channel PDSCH;
   a physical uplink control channel PUCCH; and
   a physical uplink shared channel PUSCH.

Optionally, the sending module is further configured to:
in a case that the channel type of the first resource is the PDCCH, send first indication information, where the first indication information includes the beam indication information; and
the first indication information is valid in a repeater-level control resource set CORESET/search space SS.

Optionally, the first indication information further includes at least one of the following:
a time domain resource position of the CORESET;
a frequency domain resource position of the CORESET;
a time domain resource position of the SS; and
a frequency domain resource position of the SS.

Optionally, the transmission beam indicated by the beam indication information corresponds to the repeater-level CORESET/SS.

Optionally, the apparatus further includes:
an indication information sending module, configured to send second indication information, where the second indication information indicates PDCCH monitoring occasion(s)/resource(s) on which PDCCH transmission exists, where
the beam indication information is valid in the PDCCH monitoring occasion(s)/resource(s).

Optionally, the sending module is further configured to:
send third indication information including the beam indication information, where the third indication information indicates repeater-level resource scheduling.

Optionally, the third indication information further includes at least one of the following:
a time domain resource position for the scheduling;
a frequency domain resource position for the scheduling;
a time domain position of monitoring occasion(s)/resource(s) on which the scheduling exists;
a frequency domain position of the monitoring occasion(s)/resource(s) on which the scheduling exists;
a time domain position of receiving occasion(s)/resource(s) on which the scheduling exists; and
a frequency domain position of the receiving occasion(s)/resource(s) on which the scheduling exists.

Optionally, the beam indication information is valid in at least one of the following positions:
the time domain position of the monitoring occasion(s)/resource(s) on which the scheduling exists;
the frequency domain position of the monitoring occasion(s)/resource(s) on which the scheduling exists;
the time domain position of the receiving occasion(s)/resource(s) on which the scheduling exists; and
the frequency domain position of the receiving occasion(s)/resource(s) on which the scheduling exists.

Optionally, a priority of the beam indication information sent through the third indication information is higher than that of the beam indication information indicated through a semi-persistent indication and/or a dynamic indication.

Optionally, in a case of downlink semi-persistent scheduling or uplink cell group scheduling, the beam indication information is indicated through the semi-persistent indication.

The apparatus sends beam indication information to a repeater, to indicate a transmission beam used for transmitting one first resource or one group of first resources between the repeater and a remote terminal. After the beam indication information is received, the repeater uses the indicated transmission beam for the transmission on the one first resource or one group of first resources, to implement control of a network side for the transmission between the repeater and the remote terminal, thereby ensuring higher transmission quality.

The transmission processing apparatus provided in this embodiment of this application can implement all processes implemented by a network side device in the method embodiments of FIG. 2 to FIG. 6. To avoid repetition, details are not described herein again.

As shown in FIG. 9, a transmission processing apparatus 900 in an embodiment of this application includes:
a receiving module 910, configured to receive beam indication information, where
the beam indication information indicates a transmission beam used for transmitting one first resource or one group of first resources between a repeater and a remote terminal; and the transmission beam includes a transmit beam and/or a receive beam, and the first resource includes a time domain resource and/or a frequency domain resource.

Optionally, the beam indication information is indicated in at least one of the following manners:
a semi-persistent indication; and
a dynamic indication.

Optionally, if a network side device indicates, in a semi-persistent indication manner, that the transmission beam used for the first resource is a target fixed beam or a variable beam,
in a case that the transmission beam is the target fixed beam, the network side device indicates beam information corresponding to the target fixed beam in the semi-persistent indication manner; and/or
in a case that the transmission beam is the variable beam, the network side device sends the beam indication information corresponding to the first resource in a dynamic indication manner.

Optionally, the dynamic indication manner includes:
sending, by the network side device, first DCI including the beam indication information, where
the first DCI is specified DCI used for a beam indication; and
the specified DCI includes at least one of the following:
   DCI in a specified format;
   DCI corresponding to a specified radio network temporary identifier RNTI;
   DCI corresponding to a specified control resource set CORESET; and
   DCI corresponding to a specified search space SS.

Optionally, the specified DCI is group common DCI, and a target field used for carrying the beam indication information is preconfigured in the group common DCI.

Optionally, the beam indication information includes a first identifier, the first identifier identifies one transmission beam or one group of transmission beams, and the one transmission beam or one group of transmission beams are mapped to the one first resource or one group of first resources.

Optionally, if the first resource includes the time domain resource, a granularity of the time domain resource is a slot, a sub-slot, or a symbol;
if the first resource includes the frequency domain resource, a granularity of the frequency domain resource is a resource block group RBG, a physical resource block PRB, a serving cell, or a sub-band.

Optionally, the transmission beam corresponds to one group of first resources, and the one group of first resources are resources in preset duration.

Optionally, the one first resource or one group of first resources occur in a preset periodicity.

Optionally, effective start time of the beam indication information is preset time.

Optionally, the beam indication information is sent based on a transmission direction of the first resource, where the transmission direction includes at least one of the following:
uplink transmission;
downlink transmission; and
flexible transmission.

Optionally, the beam indication information is sent based on a channel type of the first resource, where the channel type includes at least one of the following:
a physical downlink control channel PDCCH;
a physical downlink shared channel PDSCH;
a physical uplink control channel PUCCH; and
a physical uplink shared channel PUSCH.

Optionally, the receiving module is further configured to:
in a case that a channel type of the first resource is a PDCCH, receive first indication information including the beam indication information, where
the first indication information is valid in a repeater-level control resource set CORESET or search space SS.

Optionally, the first indication information further includes at least one of the following:
a time domain resource position of the CORESET;
a frequency domain resource position of the CORESET;
a time domain resource position of the SS; and
a frequency domain resource position of the SS.

Optionally, the transmission beam indicated by the beam indication information corresponds to the repeater-level CORESET/SS.

Optionally, the apparatus further includes:
a processing module, configured to: in a case that the received beam indication information does not indicate a transmission beam used for transmitting a second resource between the repeater and the remote terminal, perform at least one of the following:
transmitting the second resource by using a preset beam;
transmitting the second resource by using a beam used for previous transmission of the second resource;
stopping transmission of the second resource;
reducing transmission power of the second resource;
requesting the beam used for transmitting the second resource from the network side device; and
independently determining the beam used for transmitting the second resource, and sending the beam to the network side device.

Optionally, the receiving module is further configured to:
receive second indication information sent by the network side device, where the second indication information indicates PDCCH monitoring occasion(s)/resource(s) on which PDCCH transmission exists, where
the beam indication information is valid in the PDCCH monitoring occasion(s)/resource(s).

Optionally, the receiving module is further configured to:
receive third indication information including the beam indication information, where
the third indication information indicates repeater-level resource scheduling.

Optionally, the third indication information further includes at least one of the following:
a time domain resource position for the scheduling;
a frequency domain resource position for the scheduling;
a time domain position of monitoring occasion(s)/resource(s) on which the scheduling exists;
a frequency domain position of the monitoring occasion(s)/resource(s) on which the scheduling exists;
a time domain position of receiving occasion(s)/resource(s) on which the scheduling exists; and
a frequency domain position of the receiving occasion(s)/resource(s) on which the scheduling exists.

Optionally, the beam indication information is valid in at least one of the following positions:
the time domain position of the monitoring occasion(s)/resource(s) on which the scheduling exists;
the frequency domain position of the monitoring occasion(s)/resource(s) on which the scheduling exists;
the time domain position of the receiving occasion(s)/resource(s) on which the scheduling exists; and
the frequency domain position of the receiving occasion(s)/resource(s) on which the scheduling exists.

Optionally, a priority of the beam indication information sent through the third indication information is higher than that of the beam indication information indicated through a semi-persistent indication and/or a dynamic indication.

Optionally, in a case of downlink semi-persistent scheduling or uplink cell group scheduling, the beam indication information is indicated through the semi-persistent indication.

The apparatus receives beam indication information sent by a network side device, to know an indicated transmission beam used for transmitting one first resource or one group of first resources between a repeater and a remote terminal. Afterwards, the indicated transmission beam is used for the transmission on the one first resource or one group of first resources, to implement control of a network side for the transmission between the repeater and the remote terminal, thereby ensuring higher transmission quality.

The transmission processing apparatus in this embodiment of this application may be an apparatus, or an apparatus or an electronic device with an operating system; or may be a component, an integrated circuit, or a chip in a relay terminal. The apparatus or the electronic device may be a mobile terminal or a non-mobile terminal. For example, the mobile terminal includes, but is not limited to, the types of the terminal 11 listed above, and the non-mobile terminal may be a server, a network attached storage (Network Attached Storage, NAS), a personal computer (personal computer, PC), a television (television, TV), an automatic teller machine, a self-service machine, or the like, which are not specifically limited in this embodiment of this application.

The transmission processing apparatus provided in this embodiment of this application can implement all processes implemented by a repeater in the method embodiment of FIG. 7. To avoid repetition, details are not described herein again.

Optionally, as shown in FIG. 10, an embodiment of this application further provides a communication device 1000, including a processor 1001, a memory 1002, a program or instructions stored in the memory 1002 and runnable on the processor 1001. For example, when the communication device 1000 is a repeater, the program or the instructions, when executed by the processor 1001, implement all processes of the embodiments of the foregoing transmission processing method, and can achieve the same technical effects. When the communication device 1000 is a network side device, the program or the instructions, when executed by the processor 1001, implement all processes of the embodiments of the foregoing transmission processing method, and can achieve the same technical effects. To avoid repetition, details are not described herein again.

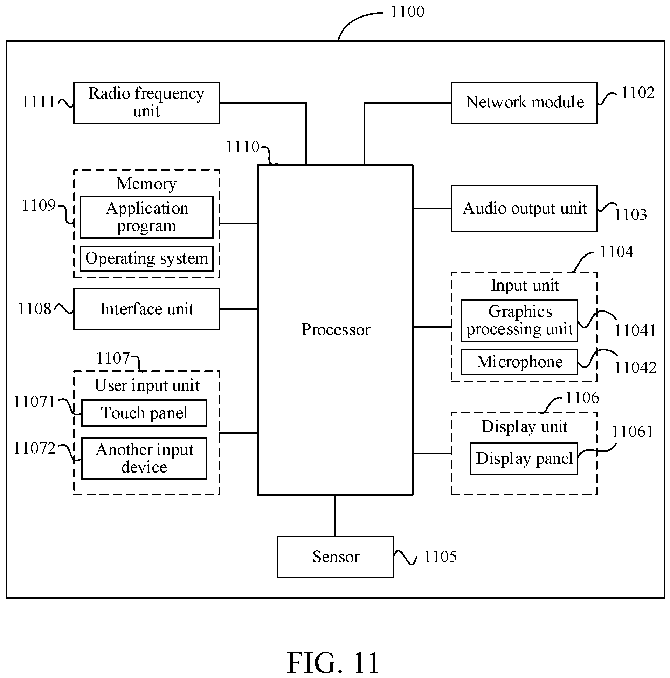

An embodiment of this application further provides a repeater, including a processor and a communication interface, where the communication interface is configured to receive beam indication information, where the beam indication information indicates a transmission beam used for transmitting one first resource or one group of first resources between the repeater and a remote terminal; and the transmission beam includes a transmit beam and/or a receive beam, and the first resource includes a time domain resource and/or a frequency domain resource. The terminal embodiment corresponds to the foregoing repeater method embodiment, and each implementation process and implementation of the foregoing method embodiment can be applied to the terminal embodiment, and can achieve the same technical effects. Specifically, FIG. 11 is a schematic diagram of a hardware structure of a terminal as a repeater that implements the embodiments of this application.

A terminal 1100 includes, but is not limited to, at least part of components such as a radio frequency unit 1101, a network module 1102, an audio output unit 1103, an input unit 1104, a sensor 1105, a display unit 1106, a user input unit 1107, an interface unit 1108, a memory 1109, and a processor 1110.

It may be understood by those skilled in the art that the terminal 1100 may further include a power supply (for example, a battery) for supplying power to various components, and the power supply may be logically connected to the processor 1110 through a power management system, to implement functions such as managing charging or discharging, and power consumption management through the power management system. A terminal structure shown in FIG. 11 does not constitute a limitation to the terminal, and the terminal may include more or fewer components than those shown in the figure, or some components may be combined, or a different component deployment may be used. Details are not described herein again.

It should be understood that, in this embodiment of this application, the input unit 1104 may include a graphics processing unit (Graphics Processing Unit, GPU) 11041 and a microphone 11042. The graphics processing unit 11041 processes image data of a still picture or a video obtained by an image capture apparatus (such as a camera) in a video capture mode or an image capture mode. The display unit 1106 may include a display panel 11061, for example, the display panel 11061 may be configured in a form such as a liquid crystal display or an organic light-emitting diode. The user input unit 1107 includes a touch panel 11071 and another input device 11072. The touch panel 11071 is also referred to as a touchscreen. The touch panel 11071 may include a touch detection apparatus and a touch controller. The another input device 11072 may include, but is not limited to, a physical keyboard, a function key (such as a volume control key, a switch key, or the like), a trackball, a mouse, and an operating lever, which is not described in detail herein.

In this embodiment of this application, the radio frequency unit 1101 receives downlink data from a network side device and sends downlink data to the processor 1110 for processing. In addition, the radio frequency unit sends uplink data to the network side device. Generally, the radio frequency unit 1101 includes, but is not limited to, an antenna, at least one amplifier, a transceiver, a coupler, a low noise amplifier, a duplexer, and the like.

The memory 1109 may be configured to store a software program or instructions, and various data. The memory 1109 may mainly include a storage program or instruction area and a storage data area, where the storage program or instruction area may store an operating system, an application program or instructions required for at least one function (for example, a sound playing function, an image playing function, or the like). In addition, the memory 1109 may include a high speed random access memory, and may also include a non-volatile memory. The non-volatile memory may be a read-only memory (Read-Only Memory, ROM), a programmable ROM (Programmable ROM, PROM), an erasable PROM (Erasable PROM, EPROM), an electrically EPROM (Electrically EPROM, EEPROM), or a flash memory. For example, the non-volatile memory may be at least one magnetic disk storage device, a flash storage device, or other volatile solid-state storage devices.

The processor 1110 may include one or more processing units. Optionally, the processor 1110 may integrate an application processor and a modem. The application processor mainly processes an operating system, a user interface, an application program or instructions, and the like. The modem mainly processes wireless communication, such as a baseband processor. It may be understood that the foregoing modem may not be integrated into the processor 1110.

The radio frequency unit 1101 is configured to receive beam indication information, where
the beam indication information indicates a transmission beam used for transmitting one first resource or one group of first resources between a repeater and a remote terminal; and the transmission beam includes a transmit beam and/or a receive beam, and the first resource includes a time domain resource and/or a frequency domain resource.

The terminal, as a repeater, receives beam indication information sent by a network side device, to know an indicated transmission beam used for transmitting one first resource or one group of first resources between the repeater and a remote terminal. Afterwards, the indicated transmission beam is used for the transmission on the one first resource or one group of first resources, to implement control of a network side for the transmission between the repeater and the remote terminal, thereby ensuring higher transmission quality.

An embodiment of this application further provides a network side device, including a processor and a communication interface, where the communication interface is configured to send beam indication information, where the beam indication information indicates a transmission beam used for transmitting one first resource or one group of first resources between a repeater and a remote terminal; and the transmission beam includes a transmit beam and/or a receive beam, and the first resource includes a time domain resource and/or a frequency domain resource. The network side device embodiment corresponds to the foregoing network side device method embodiment, and each implementation process and implementation of the foregoing method embodiment can be applied to the network side device embodiment, and can achieve the same technical effects.

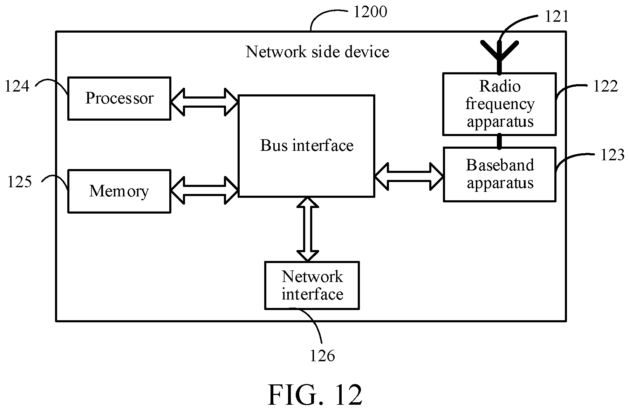

Specifically, an embodiment of this application further provides a network side device. As shown in FIG. 12, a network device 1200 includes an antenna 121, a radio frequency apparatus 122, and a baseband apparatus 123. The antenna 121 is connected to the radio frequency apparatus 122. In an uplink direction, the radio frequency apparatus 122 receives information by using the antenna 121, and sends the received information to the baseband apparatus 123 for processing. In a downlink direction, the baseband apparatus 123 processes information that is to be sent, and sends the information to the radio frequency apparatus 122. The radio frequency apparatus 122 processes the received information and sends the information by using the antenna 121.

A frequency band processing apparatus may be located in the baseband apparatus 123, so that the method executed by the network side device in the foregoing embodiments can be implemented in the baseband apparatus 123. The baseband apparatus 123 includes a processor 124 and a memory 125.

The baseband apparatus 123 may include, for example, at least one baseband plate. A plurality of chips are disposed on the baseband plate. As shown in FIG. 12, one of the plurality of chips is, for example, the processor 124, and is connected to the memory 125, to invoke a program in the memory 125 to perform operations of the network device in the above method embodiments.

The baseband apparatus 123 may further include a network interface 126, configured to exchange information with the radio frequency apparatus 122. The interface is, for example, a common public radio interface (common public radio interface, CPRI for short).

Specifically, the network side device in this embodiment of the present invention further includes: instructions or a program stored in the memory 125 and runnable on the processor 124, and the processor 124 invokes the instructions or the program stored in the memory 125 to perform the method executed by various modules shown in FIG. 8, and can also achieve the same technical effects. To avoid repetition, details are not described herein again.

An embodiment of this application further provides a readable storage medium, storing a program or instructions, where the program or the instructions, when executed by a processor, implement all processes of the embodiments of the transmission processing method performed by a network side device or the transmission processing method performed by a repeater, and can achieve the same technical effects. To avoid repetition, details are not described herein again.

The processor is the processor in the network side device or the repeater in the foregoing embodiments. The readable storage medium includes a computer-readable storage medium, for example, a computer read-only memory (Read-Only Memory, ROM for short), a random access memory (Random Access Memory, RAM for short), a magnetic disk, or an optical disc.

An embodiment of this application further provides a chip, including a processor and a communication interface, where the communication interface is coupled to the processor, and the processor is configured to run a program or instructions, to implement all processes of the embodiments of the transmission processing method performed by a network side device or the transmission processing method performed by a repeater, and can achieve the same technical effects. To avoid repetition, details are not described herein again.

It should be understood that, the chip mentioned in this embodiment of this application may also be referred to as a system-level chip, a system chip, a chip system, a system on chip, or the like.

An embodiment of this application further provides a computer program program/program product, stored in a storage medium. The program/program product is configured to be executed by at least one processor to implement all processes of the embodiments of the transmission processing method performed by a network side device or the transmission processing method performed by a repeater, and can achieve the same technical effects. To avoid repetition, details are not described herein again.

It should be noted that, the term "include", "comprise" or any other variation thereof in this specification is intended to cover a non-exclusive inclusion, which specifies the presence of stated processes, methods, objects, or apparatuses, but does not preclude the presence or addition of one or more other processes, methods, objects, or apparatuses. Without more limitations, elements defined by the sentence "including one ..." does not exclude that there are still other same elements in the processes, methods, objects, or apparatuses. In addition, it should be noted that the scope of the methods and apparatuses in the implementations of this application is not limited to performing the functions in the order shown or discussed, but may also include performing, according to involved functions, the functions basically simultaneously or in a reverse order. For example, the described methods may be performed in an order different from that described, and various steps may also be added, omitted, or combined. In addition, features described with reference to some examples may be combined in other examples.

Through the descriptions of the foregoing implementations, a person skilled in the art may clearly understand that the method according to the foregoing embodiments may be implemented by means of software and a necessary general hardware platform, and certainly, may alternatively be implemented by hardware, but in many cases, the former manner is a better implementation. Based on such an understanding, the technical solutions in this application essentially or the part contributing to the existing technologies may be implemented in the form of a software product. The computer software product is stored in a storage medium (for example, a read-only memory (ROM)/random access memory (RAM), a magnetic disk or an optical disc), and includes several instructions for instructing a terminal (which may be a mobile phone, a computer, a server, an air conditioner, a network device, a repeater, or the like) to perform the method described in the embodiments of this application.

The embodiments of this application are described above with reference to the accompanying drawings. However, this application is not limited to the foregoing specific implementations. The foregoing specific implementations are illustrative instead of limitative. Enlightened by this application, a person of ordinary skill in the art can make many forms without departing from the idea of this application and the scope of protection of the claims. All of the forms fall within the protection of this application.

## Claims

1. A transmission processing method, comprising:
sending, by a network side device, beam indication information, wherein
the beam indication information indicates a transmission beam used for transmitting one first resource or one group of first resources between a repeater and a remote terminal; and the transmission beam comprises a transmit beam and/or a receive beam, and the first resource comprises a time domain resource and/or a frequency domain resource.

2. The method according to claim 1, wherein the beam indication information is indicated in at least one of the following manners:
a semi-persistent indication; and
a dynamic indication.

3. The method according to claim 1, wherein the transmission beam is a fixed beam or a variable beam.

4. The method according to claim 3, wherein the network side device indicates, in a semi-persistent indication manner, that the transmission beam used for the first resource is a target fixed beam or a variable beam, wherein
in a case that the transmission beam is the target fixed beam, the network side device indicates beam information corresponding to the target fixed beam in the semi-persistent indication manner; and/or
in a case that the transmission beam is the variable beam, the network side device sends the beam indication information corresponding to the first resource in a dynamic indication manner.

5. The method according to claim 2, wherein that the network side device sends the beam indication information corresponding to the first resource in a dynamic indication manner comprises:
sending first DCI comprising the beam indication information, wherein
the first DCI is specified DCI used for a beam indication; and
the specified DCI comprises at least one of the following:
DCI in a specified format;
DCI corresponding to a specified radio network temporary identifier RNTI;
DCI corresponding to a specified control resource set CORESET; and
DCI corresponding to a specified search space SS.

6. The method according to claim 5, wherein the specified DCI is group common DCI, and a target field used for carrying the beam indication information is preconfigured in the group common DCI.

7. The method according to claim 1, wherein the beam indication information comprises a first identifier, the first identifier identifies one transmission beam or one group of transmission beams, and the one transmission beam or one group of transmission beams are mapped to the one first resource or one group of first resources.

8. The method according to claim 1, wherein
if the first resource comprises the time domain resource, a granularity of the time domain resource is a slot, a sub-slot, or a symbol; and/or
if the first resource comprises the frequency domain resource, a granularity of the frequency domain resource is a resource block group RBG, a physical resource block PRB, a serving cell, or a sub-band.

9. The method according to claim 1, wherein the transmission beam corresponds to one group of first resources, and the one group of first resources are resources in preset duration.

10. The method according to claim 1, wherein the one first resource or one group of first resources occur in a preset periodicity.

11. The method according to claim 1, wherein effective start time of the beam indication information is preset time.

12. The method according to claim 1, wherein the sending, by a network side device, beam indication information comprises:
sending, by the network side device, the corresponding beam indication information based on a transmission direction of the first resource, wherein
the transmission direction comprises at least one of the following:
uplink transmission;
downlink transmission; and
flexible transmission.

13. The method according to claim 1, wherein the sending, by a network side device, beam indication information comprises:
sending, by the network side device, the corresponding beam indication information based on a channel type of the first resource, wherein
the channel type comprises at least one of the following:
a physical downlink control channel PDCCH;
a physical downlink shared channel PDSCH;
a physical uplink control channel PUCCH; and
a physical uplink shared channel PUSCH.

14. The method according to claim 13, wherein the sending, by the network side device, the corresponding beam indication information based on a channel type of the first resource comprises:
in a case that the channel type of the first resource is the PDCCH, sending, by the network side device, first indication information, wherein the first indication information comprises the beam indication information; and
the first indication information is valid in a repeater-level control resource set CORESET/search space SS.

15. The method according to claim 14, wherein the first indication information further comprises at least one of the following:
a time domain resource position of the CORESET;
a frequency domain resource position of the CORESET;
a time domain resource position of the SS; and
a frequency domain resource position of the SS.

16. The method according to claim 14, wherein the transmission beam indicated by the beam indication information corresponds to the repeater-level CORESET/SS.

17. The method according to claim 14, wherein after the sending, by the network side device, first indication information comprising the beam indication information, the method further comprises:
sending, by the network side device, second indication information, wherein the second indication information indicates PDCCH monitoring occasion(s)/resource(s) on which PDCCH transmission exists, wherein
the beam indication information is valid in the PDCCH monitoring occasion(s)/resource(s).

18. The method according to claim 1, wherein the sending, by a network side device, beam indication information comprises:
sending, by the network side device, third indication information comprising the beam indication information, wherein the third indication information indicates repeater-level resource scheduling.

19. The method according to claim 18, wherein the third indication information further comprises at least one of the following:
a time domain resource position for the scheduling;
a frequency domain resource position for the scheduling;
a time domain position of monitoring occasion(s)/resource(s) on which the scheduling exists;
a frequency domain position of the monitoring occasion(s)/resource(s) on which the scheduling exists;
a time domain position of receiving occasion(s)/resource(s) on which the scheduling exists; and
a frequency domain position of the receiving occasion(s)/resource(s) on which the scheduling exists.

20. The method according to claim 19, wherein the beam indication information is valid in at least one of the following positions:
the time domain position of the monitoring occasion(s)/resource(s) on which the scheduling exists;
the frequency domain position of the monitoring occasion(s)/resource(s) on which the scheduling exists;
the time domain position of the receiving occasion(s)/resource(s) on which the scheduling exists; and
the frequency domain position of the receiving occasion(s)/resource(s) on which the scheduling exists.

21. The method according to claim 18, wherein a priority of the beam indication information sent through the third indication information is higher than that of the beam indication information indicated through a semi-persistent indication and/or a dynamic indication.

22. The method according to claim 2, wherein in a case of downlink semi-persistent scheduling or uplink cell group scheduling, the beam indication information is indicated through the semi-persistent indication.

23. A transmission processing method, comprising:
receiving, by a repeater, beam indication information, wherein
the beam indication information indicates a transmission beam used for transmitting one first resource or one group of first resources between the repeater and a remote terminal; and the transmission beam comprises a transmit beam and/or a receive beam, and the first resource comprises a time domain resource and/or a frequency domain resource.

24. The method according to claim 23, wherein the beam indication information is indicated in at least one of the following manners:
a semi-persistent indication; and
a dynamic indication.

25. The method according to claim 23, wherein the transmission beam is a fixed beam or a variable beam.

26. The method according to claim 23, wherein if a network side device indicates, in a semi-persistent indication manner, that the transmission beam used for the first resource is a target fixed beam or a variable beam,
in a case that the transmission beam is the target fixed beam, the network side device indicates beam information corresponding to the target fixed beam in the semi-persistent indication manner; and/or
in a case that the transmission beam is the variable beam, the network side device sends the beam indication information corresponding to the first resource in a dynamic indication manner.

27. The method according to claim 24, wherein the dynamic indication manner comprises:
sending, by the network side device, first DCI comprising the beam indication information, wherein
the first DCI is specified DCI used for a beam indication; and
the specified DCI comprises at least one of the following:
DCI in a specified format;
DCI corresponding to a specified radio network temporary identifier RNTI;
DCI corresponding to a specified control resource set CORESET; and
DCI corresponding to a specified search space SS.

28. The method according to claim 27, wherein the specified DCI is group common DCI, and a target field used for carrying the beam indication information is preconfigured in the group common DCI.

29. The method according to claim 23, wherein the beam indication information comprises a first identifier, the first identifier identifies one transmission beam or one group of transmission beams, and the one transmission beam or one group of transmission beams are mapped to the one first resource or one group of first resources.

30. The method according to claim 23, wherein
if the first resource comprises the time domain resource, a granularity of the time domain resource is a slot, a sub-slot, or a symbol; and/or
if the first resource comprises the frequency domain resource, a granularity of the frequency domain resource is a resource block group RBG, a physical resource block PRB, a serving cell, or a sub-band.

31. The method according to claim 23, wherein the transmission beam corresponds to one group of first resources, and the one group of first resources are resources in preset duration.

32. The method according to claim 23, wherein the one first resource or one group of first resources occur in a preset periodicity.

33. The method according to claim 23, wherein effective start time of the beam indication information is preset time.

34. The method according to claim 23, wherein the beam indication information is sent based on a transmission direction of the first resource, wherein the transmission direction comprises at least one of the following:
uplink transmission;
downlink transmission; and
flexible transmission.

35. The method according to claim 23, wherein the beam indication information is sent based on a channel type of the first resource, wherein the channel type comprises at least one of the following:
a physical downlink control channel PDCCH;
a physical downlink shared channel PDSCH;
a physical uplink control channel PUCCH; and
a physical uplink shared channel PUSCH.

36. The method according to claim 23, wherein the receiving, by a repeater, beam indication information comprises:
in a case that a channel type of the first resource is a PDCCH, receiving, by the repeater, first indication information comprising the beam indication information, wherein
the first indication information is valid in a repeater-level control resource set CORESET or search space SS.

37. The method according to claim 36, wherein the first indication information further comprises at least one of the following:
a time domain resource position of the CORESET;
a frequency domain resource position of the CORESET;
a time domain resource position of the SS; and
a frequency domain resource position of the SS.

38. The method according to claim 36, wherein the transmission beam indicated by the beam indication information corresponds to the repeater-level CORESET/SS.

39. The method according to claim 23, wherein after the receiving, by a repeater, beam indication information, the method further comprises:
in a case that the received beam indication information does not indicate a transmission beam used for transmitting a second resource between the repeater and the remote terminal, performing at least one of the following:
transmitting the second resource by using a preset beam;
transmitting the second resource by using a beam used for previous transmission of the second resource;
stopping transmission of the second resource;
reducing transmission power of the second resource;
requesting the beam used for transmitting the second resource from the network side device; and
independently determining the beam used for transmitting the second resource, and sending the beam to the network side device.

40. The method according to claim 36, wherein after the receiving, by the repeater, first indication information comprising the beam indication information, the method further comprises:
receiving, by the repeater, second indication information sent by the network side device, wherein the second indication information indicates PDCCH monitoring occasion(s)/resource(s) on which PDCCH transmission exists, wherein
the beam indication information is valid in the PDCCH monitoring occasion(s)/resource(s).

41. The method according to claim 23, wherein the receiving, by a repeater, beam indication information comprises:
receiving, by the repeater, third indication information comprising the beam indication information, wherein
the third indication information indicates repeater-level resource scheduling.

42. The method according to claim 41, wherein the third indication information further comprises at least one of the following:
a time domain resource position for the scheduling;
a frequency domain resource position for the scheduling;
a time domain position of monitoring occasion(s)/resource(s) on which the scheduling exists;
a frequency domain position of the monitoring occasion(s)/resource(s) on which the scheduling exists;
a time domain position of receiving occasion(s)/resource(s) on which the scheduling exists; and
a frequency domain position of the receiving occasion(s)/resource(s) on which the scheduling exists.

43. The method according to claim 42, wherein the beam indication information is valid in at least one of the following positions:
the time domain position of the monitoring occasion(s)/resource(s) on which the scheduling exists;
the frequency domain position of the monitoring occasion(s)/resource(s) on which the scheduling exists;
the time domain position of the receiving occasion(s)/resource(s) on which the scheduling exists; and
the frequency domain position of the receiving occasion(s)/resource(s) on which the scheduling exists.

44. The method according to claim 41, wherein a priority of the beam indication information sent through the third indication information is higher than that of the beam indication information indicated through a semi-persistent indication and/or a dynamic indication.

45. The method according to claim 24, wherein
in a case of downlink semi-persistent scheduling or uplink cell group scheduling, the beam indication information is indicated through the semi-persistent indication.

46. A transmission processing apparatus, comprising:
a sending module, configured to send beam indication information, wherein
the beam indication information indicates a transmission beam used for transmitting one first resource or one group of first resources between a repeater and a remote terminal; and the transmission beam comprises a transmit beam and/or a receive beam, and the first resource comprises a time domain resource and/or a frequency domain resource.

47. A transmission processing apparatus, comprising:
a receiving module, configured to receive beam indication information, wherein
the beam indication information indicates a transmission beam used for transmitting one first resource or one group of first resources between a repeater and a remote terminal; and the transmission beam comprises a transmit beam and/or a receive beam, and the first resource comprises a time domain resource and/or a frequency domain resource.

48. A network side device, comprising a processor, a memory, and a program or instructions stored in the memory and runnable on the processor, the program or the instructions, when executed by the processor, implementing steps of the transmission processing method according to any one of claims 1 to 22.

49. A repeater, comprising a processor, a memory, and a program or instructions stored in the memory and runnable on the processor, the program or the instructions, when executed by the processor, implementing steps of the transmission processing method according to any one of claims 23 to 45.

50. A readable storage medium, storing a program or instructions, the program or the instructions, when executed by a processor, implementing steps of the transmission processing method according to any one of claims 1 to 22, or implementing steps of the transmission processing method according to any one of claims 23 to 45.

51. A chip, comprising a processor and a communication interface, wherein the communication interface is coupled to the processor, and the processor is configured to run a program or instructions, to implement the transmission processing method according to any one of claims 1 to 22, or implement the transmission processing method according to any one of claims 23 to 45.

52. A computer program product, wherein the program product is configured to be executed by at least one processor to implement the transmission processing method according to any one of claims 1 to 22, or implement the transmission processing method according to any one of claims 23 to 45.

53. A communication device, configured to perform the transmission processing method according to any one of claims 1 to 22, or perform the transmission processing method according to any one of claims 23 to 45.
